# EUROPEAN PATENT SPECIFICATION

(11) **EP 2 347 879 B1**
(45) Date of publication and mention of the grant of the patent: **28.11.2012**
(21) Application number: 10382009.8
(22) Date of filing: 20.01.2010
(51) Int. Cl.: B29C 45/00, B29C 45/16, B29C 45/06

(54) **An injection moulding device for making articles from two injection moulded parts and method for making such articles**
Spritzgussvorrichtung zur Herstellung von Artikeln aus zwei spritzgegossenen Teilen und Verfahren zur Herstellung solcher Artikel
Dispositif de moulage par injection pour la réalisation d'articles à partir de deux parties moulées par injection et procédé de fabrication desdits articles

(43) Date of publication of application: 27.07.2011
(73) Proprietor: Cie Automotive, S.A., 48011 Bilbao (ES)
(72) Inventor: Azenha, João, 48011, BILBAO (Vizcaya) (ES); Alexandre, Sónia, 48011, BILBAO (Vizcaya) (ES); Viana, Julio, 4800-058, GUIMARÃES (PT); Ribeiro, Carlos, 4800-058, GUIMARÃES (PT); Teixeira, Dario, 4800-058, GUIMARÃES (PT)
(74) Representative: Carpintero Lopez, Francisco

(56) References cited:
- EP-A1- 1 060 868
- EP-A1- 1 502 723
- US-A- 5 221 538
- US-A- 6 026 852
- US-A1- 2002 028 651
- US-A1- 2004 094 866
- US-A1- 2005 003 161
- US-A1- 2008 079 191

## Description

### TECHNICAL FIELD OF THE INVENTION

The present invention lies within the technical field of injection moulding and, particularly, within the field of methods and moulds used for welding together injection-moulded plastic parts.

### BACKGROUND OF THE INVENTION

Many plastic articles are assemblies of a two parts made by injection moulding which are welded together by portions of the respective surfaces facing each other by a welding material, such that there is a gap between these surfaces in the finished article. To manufacture such articles, methods are used according to which the first and the second plastic parts are made by injection moulding. The so made parts are then positioned to be joined together by welding using a welding material inserted between the parts. The portions to be welded together may be the peripheral edges of the parts and/or rather inaccessible inner elements such as stiffening or reinforcing ribs, partition walls, inner channels, etc. Examples of such plastic articles are glove box doors composed of several different parts. According the conventional process for manufacturing such doors, the conventional process requires three moulds (inner glove box door part, outer glove box door part and lock) and three sets of components (a spring, an axis and two bumpers). First there is the injection of the inner part glove box door and the outer part of the glove box door; and then the components are assembled to one of the glove box. Thereafter, the inner glove box door part and the outer glove box door part are positioned facing each other to be joined together.

US 6, 026, 852, EP 1 060 868 A1, US 2002/0028651 A1 and US 2004/0094866 A1 disclose injection moulding devices for making articles from at least two injection moulded parts.

These conventional methods require welding of the plastic parts to be carried out as a separate process in a separate welding machine, as well as the intervention of an operator to transfer the parts from the moulding machine to the welding machine. This has the disadvantages of delaying the manufacture of the articles and increasing the expenses of the equipment needed and of the manufacturing process as such.

### DESCRIPTION OF THE INVENTION

The present invention is intended to overcome the afore mentioned drawbacks of prior art by an injection moulding device for making articles from two injection-moulded parts and by a method for making such articles using the injection moulding device.

The injection-moulding device according to the present invention comprises an injection side with an injection-side mould portion comprising injection-side moulding cavities, and an ejection side with an ejection-side mould portion comprising ejection-side moulding cavities, the moulding device **characterized in that**
the injection-side mould portion comprises a first injection-side half with two equal first injection-side moulding cavities for moulding an outer surface of a first part to be formed by injection moulding, the two equal first injection-side moulding cavities being mirror-images of each other, and a second injection-side half with a second injection-side moulding cavity for moulding an inner surface of a second part to be formed by injection moulding, and a void cavity;
the ejection-side mould portion comprises two first equal ejection-side moulding cavities for moulding an inner surface of said first part, and two second equal ejection-side cavities for moulding an outer surface of said second part, the two first equal ejection-side moulding cavities and the two second equal ejection-side moulding cavities respectively mirroring each other, and being positioned such that one of the first equal ejection-side moulding cavities and one of the second equal ejection-side moulding cavities is located on each half of the ejection-side mould portion;
the first injection-side half of the injection-side mould portion is rotary by 180º;
the ejection-side mould portion is rotary by 180º;
welding-gate-forming patterns are provided in the second injection-side moulding cavity, in each of the second equal ejection-side moulding cavities or in both said second injection-side moulding cavity and each of the second equal ejection-side moulding cavities, the welding-gate-forming patterns being designed to form injection-moulded welding gates each comprised of a channel located between protruding side walls;
the welding-gate-forming patterns being dimensioned such that the side walls of the welding gates formed on the inner surface of one injection-moulded part may contact the inner surface of the other injection-moulded part so that, when a welding material has been injected into the channels of the welding gates, the welding gates on the inner surface of one injection-moulded part become welded to the inner surface of the other injection-moulded part.

Preferably, the welding-gate-forming patterns are designed to form welding gates that comprise a peripheral welding gate extending along a peripheral edge portion of the inner surface of one of said injection-moulded parts, as well as a plurality of inner welding gates that extend along said inner surface.

In a first embodiment of the invention, the welding-gate-forming patterns are provided in the second injection-side moulding cavity, whilst welding gate reinforcing-forming patterns being shaped to form welding gate reinforcing channels surrounding the side walls of the welding gates, are provided in each of the first equal ejection-side moulding cavities.

In a second embodiment of the invention, the reinforcement-forming patterns further comprise lateral extensions being positioned such that reinforcement ribs extending laterally from outer side walls of the welding gate reinforcements are formed.

In a third embodiment of the invention,
a first plurality of welding-gate-forming patterns is provided in each of the first equal ejection-side moulding cavities, whilst a first plurality of welding gate reinforcement-forming patterns is provided in the second injection-moulding cavity for forming first welding gate reinforcements, the reinforcement-forming patterns of the first plurality of reinforcement-forming patterns being positioned such that they form first welding gate reinforcements surrounding the side walls of the welding gates formed by said first plurality of welding-gate-forming patterns; and in that
a second plurality of welding-gate-forming patterns is provided in the second injection-moulding cavity for forming second welding gates and a second plurality of reinforcement-forming patterns is provided in each of the first equal ejection-side moulding cavities for forming second welding gate reinforcements, the reinforcement-forming patterns of the second plurality of reinforcement-forming patterns being positioned such that they form second welding gate reinforcements surrounding the side walls of the second welding gates formed by the second plurality of welding gate patterns.

The purpose of the welding gate reinforcements is as follows: due to the injection pressure of the injection of the welding material and because plastic is injected over plastic, both parts (i.e. the inner injection-moulded part and the outer injection-moulded part) conveniently need to be reinforced. This reinforcement is enhanced by the reinforcement ribs that are perpendicular to the gate. This perpendicular ribs are positioned according to the existing pressure along the welding gates such that, where the injection pressure is higher the distance between ribs is lower and where the injection pressure is lower the distance between the ribs is higher.

The method of the invention comprises
injection-moulding a first part and injection-moulding a second part and welding the parts together to form a finished article using a device as described herein above and comprising
forming welding gates on at least one of the inner surfaces of the two injection-moulded parts that are to be welded together, the welding gates being comprised of channels located between protruding side walls;
positioning the first part on the injection-side mould portion and the second part on the ejection-side mould portion by rotating a first half of the injection-side mould portion and the ejection-side mould portion each by 180º, thereby positioning the two parts such that their inner surfaces face each other and the protruding side walls of the welding gates of one of the parts contact the inner surface of the other part;
closing the moulding device and injecting a welding material through the channels of the welding gates such that welding gates on the inner surface of one injection-moulded part become welded to the inner surface of the other injection-moulded part;
opening the moulding device and extracting the finished articles.

By this method, the welding gates on one of the inner surfaces of one of the injection-moulded part through which the welding material has been injected are welded to the inner surface of the other injection-moulded part, whereby the two injection-moulded parts are joined to each other.

In a preferred embodiment of the method according to this invention, the welding gates are formed on the inner surface of one of the parts and welding gate reinforcing channels surrounding the welding gates are formed on the inner surface of the other part.

In this preferred embodiment, that welding gate reinforcing ribs extending laterally from outer side walls of the welding gate reinforcing channels are formed.

In accordance with the invention, the welding material that is injected into the welding gates and, where existing, into the welding gate reinforcements can be the same material as the material from which the injection-moulded parts are formed. However, the welding material can also be a different material such as, for example, a thermoplastic material of the same family with additives such as flow-increase additives that will permit the welding material to have a higher flow length.

As apparent, the present invention provides the possibility of in-mould welding allowing to make a finished article without the need for a separate welding process in a separate welding tool, as making the parts composing the finished articles as well as assembling the parts by welding may be carried out inside the very same moulding devices.

### BRIEF DESCRIPTION OF THE DRAWINGS

Hereinafter, aspects and embodiments of the invention will be described on the grounds of drawings in which
figure 1 shows an exploded image of the parts of a glove box door made in accordance with the present invention;
figure 2 is a front view of the ejection side of an embodiment of a mould according to the present invention as seen from the injection side;
figure 3 is a front view of the injection side of the mould shown in figure 2 as seen from the ejection side;
figure 4 is a view in lateral perspective of the mould shown in figure 2 in a status where the ejection side of the mould has started pivoting;
figure 5 is a view in lateral perspective of the mould shown in figure 3 in a status where the injection side of the mould has started pivoting;
figure 6 is a view of the inner surface of an embodiment of an inner part of a glove box door according to a first scenario;
figure 7 is a view of the inner surface of an embodiment of an outer part of a glove box door according to a first scenario;
figure 8 is a view of the inner surface of an embodiment of an inner part of a glove box door according to a second scenario;
figure 9 is a view of the inner surface of an embodiment of an outer part of a glove box door according to a second scenario;
figure 10A is a front elevation view of a glove box door manufactured from the parts shown in figures 6 and 7;
figure 10B is a partial sectional view of a glove box door manufactured from the parts shown in figures 6 and 7;
figure 11 is a view through section A-A shown in figure 10A;
figure 12 is a view through section B-B shown in figure 10A;
figure 13 is a view through section C-C shown in figure 10A;
figure 14A is a front elevation view of a glove box door manufactured from the parts shown in figures 8 and 9;
figure 14B is a partial sectional view of a glove box door manufactured from the parts shown in figures 8 and 9;
figure 15 is a view through section A'-A' shown in figure 14A;
figure 16 is a view through section B'-B' shown in figure 14A;
figure 17 is a view through section C'-C' shown in figure 14A;
figure 18A is an elevation view of an embodiment of the rear portion of the ejection side of an embodiment of a moulding device according to the present invention showing a section line T-T referencing a transversal section;
figure 18B is an elevation view of an embodiment of the rear portion of the ejection side of the moulding device shown in figure 18A showing a section line L-L referencing a longitudinal section;
figure 19A is a transverse sectional view along the line T-T of the moulding device shown in figure 18A when opened and carrying the already injected inner and outer part;
figure 19B is a longitudinal sectional view along the line L-L of the moulding device shown in figure 18B when opened and carrying a finished welded article ready for extraction;
figure 20A is a transverse sectional view along the line T-T of the moulding device shown in figure 18A when open and after both the injection side and the ejection side have been rotated by 180º;
figure 20B is a longitudinal sectional view along the line L-L of the moulding device shown in figure 18B when open and after both the injection side and the ejection side have been rotated by 180º;
figure 21A is a transverse sectional view along the line T-T of the moulding device shown in figure 18A when closed and before resin injection;
figure 21B is a longitudinal sectional view along the line L-L of the moulding device shown in figure 18A when closed and before resin injection;
figure 22A is a transverse sectional view along the line T-T of the moulding device shown in figure 18A when closed and after resin injection;
figure 22B is a longitudinal sectional view along the line L-L of the moulding device shown in figure 18B when closed and after resin injection;
figure 23A is a transverse sectional view along the line T-T of the moulding device shown in figure 18A when opened again after resin injection and carrying a finished welded article ready for extraction;
figure 23B is a longitudinal sectional view along the line L-L of the moulding device shown in figure 18B when opened again after resin injection and carrying a finished welded article ready for extraction.

In these figures, there are reference signs identifying the following elements:
- 1: second (=inner) part of glove box door
- 1a: inner surface of second part
- 1b: outer surface of second part
- 2: first (=outer) part of glove box door
- 2a: inner surface of first part
- 2b: outer surface of first part
- 3: lock
- 4: spring
- 5: bumper
- 6: welding material
- 7: injection side of the mould
- 8: ejection side of the mould
- 9: finished welded glove box door
- 10: injection-side mould portion
- 10A: first injection-side half
- 10B: second injection-side half
- 11: injection-side moulding cavities
- 11a; 11b: first injection-side moulding cavities
- 11c: second injection-side moulding cavity
- 11d: void cavity
- 12: ejection-side mould portion
- 13: ejection-side moulding cavities
- 13a, 13a': first equal ejection-side moulding cavities
- 13b, 13b': second equal ejection-side cavities
- 14: welding-gate-forming pattern
- 14A: peripheral welding-gate forming pattern
- 15: welding gates
- 15A: peripheral welding gate
- 15a: channel
- 15b: side walls
- 16: welding gate reinforcement-forming pattern
- 17: welding gate reinforcement
- 17a: welding gate reinforcement wall
- 18: rotary plate

### EMBODIMENTS OF THE INVENTION

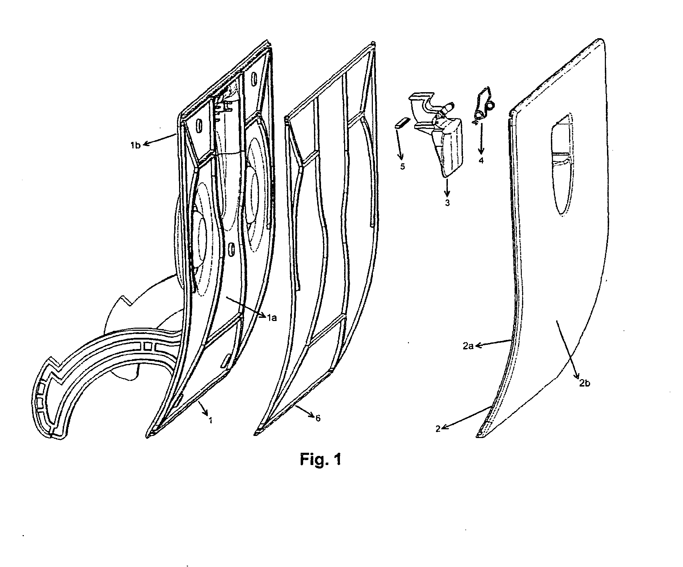

Figure 1 shows the components of a glove box door which is formed in accordance with an embodiment of the present invention by welding together two parts, -1-, and -2- using a welding material -6-. Albeit the welding material -6- is shown separately in figure 1, the welding material is in fact not a separate structure. Thus, figure 1 shows the shape of welding material -6- as present within welding gates into which it has been injected. The nature and function of the welding gates will be explained herein below.

The glove box door is made of an inner part -1- and an outer part -2-. A locking assembly comprising a lock -3- a spring -4- and a bumper -5- are provided to the inner and outer parts -1-, -2-. The inner part -1- has an inner surface -1a- and an outer surface -1b-. Welding gates including a peripheral welding gate along the peripheral edge portion of the inner surface -1a- protrude from said inner surface -1a-. The outer part -2- also has an inner surface -2a- that faces the inner surface -1a- of the inner part -1-. To join the inner part -1- to the outer part -2-, the welding gates on the inner surface -1a- of the inner part -1- and the inner surface -2a- of the outer part -2- are brought into contact with each other and the welding material -6- is injected into the peripheral welding gate and inner welding gates such that the inner part -1- and the outer part -2- become welded to each other. The peripheral welding gate and the inner welding gates thus serve to join the inner and outer parts -1- and -2- respectively and also serve as spacing and stiffening elements for the glove box door.

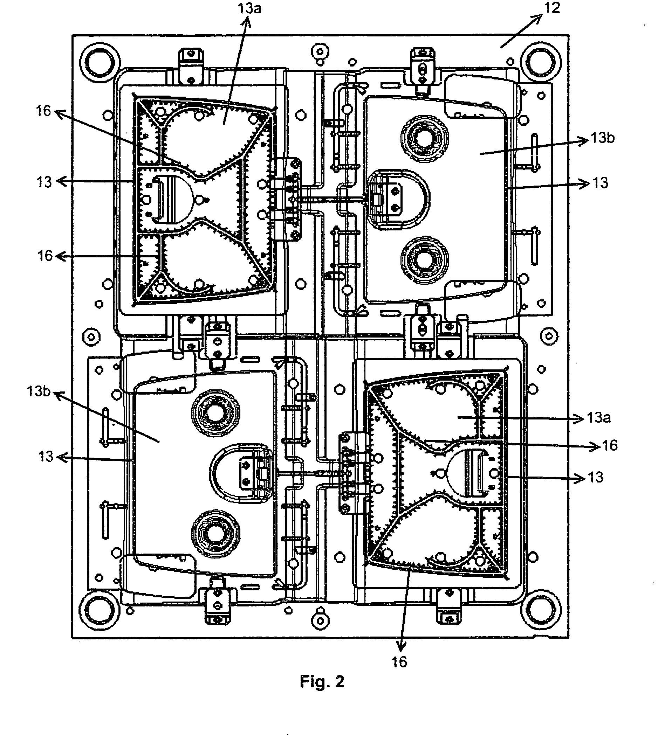

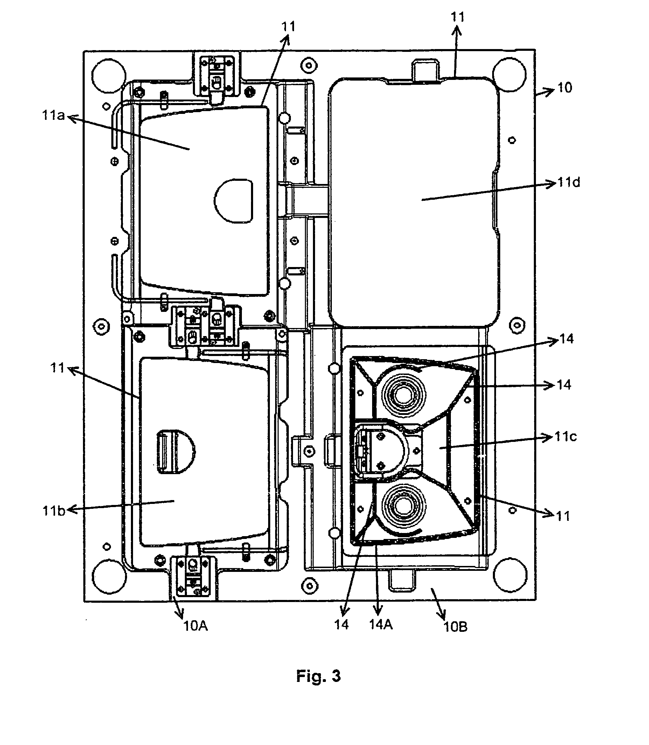

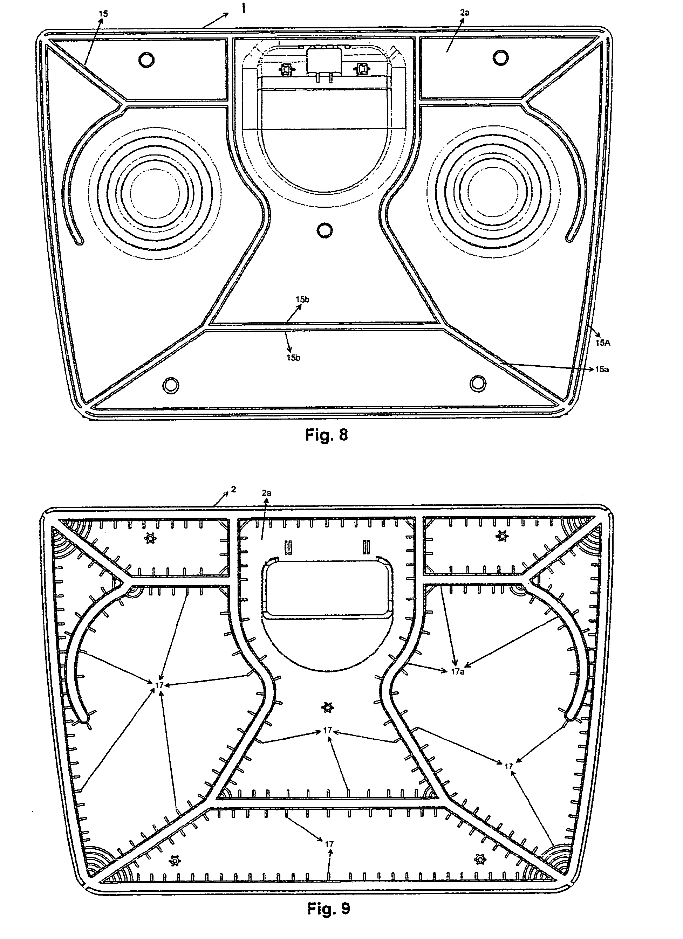

Figures 2 and 3 respectively show embodiments of an injection-side mould portion -10- comprising injection-side moulding cavities -11-, and an ejection-side mould portion -12- comprising ejection-side moulding cavities -13- that are useful in making the inner and outer parts shown in figures 8 and 9.

The ejection-side mould portion -12- comprises two first equal ejection-side moulding cavities -13a- for moulding an inner surface -2a- of the outer part -2- and two second equal ejection-side cavities -13b- for moulding an outer surface -1b- of the inner part -1-. The two first equal ejection-side moulding cavities -13a- and the two second equal ejection-side moulding cavities -13b- respectively mirror each other, and are positioned such that one of the first equal ejection-side moulding cavities -13a- and one of the second equal ejection-side moulding cavities -13b- is located on each half of the ejection-side mould portion -12-. On the other hand, the injection-side mould portion -10- comprises a first injection-side half -10A- with two equal first injection-side moulding cavities -11a- and -11b- for moulding an outer surface -2b- of the outer part -2- to be formed by injection moulding, and a second injection-side half -10B- with a second injection-side moulding cavity -11c- for moulding an inner surface -1a- of the inner part -1- to be formed by injection moulding, and a void cavity -11d-. The two equal first injection-side moulding cavities -11a- and -11b- are mirror-images of each other. The purpose of the void cavity -11d- is to avoid collisions between the mould portions when closing the mould.

Welding-gate-forming patterns -14- are provided in the second injection-side moulding cavity -11c- that is located in the second half -10B- of the injection-side moulds portion -10-, to form injection-moulded welding gates -15- each of which is comprised of a channel -15a- located between protruding side walls -15b-. The welding-gate-forming patterns -14- are dimensioned such that the side walls -15b- of the welding gates -15- formed on the inner surface -1a- of the inner injection-moulded part -1- may contact the inner surface -2a- of the outer injection-moulded part -2-. Thus, when a welding material -6- has been injected into the channels -15a- of the welding gates -15-, the welding gates -15- on the inner surface of one injection-moulded part become welded to the inner surface of the other injection-moulded part. The welding-gate forming patterns -14- comprise a peripheral welding-gate-forming pattern -14A- designed to form peripheral welding gate -15A- that extends along a peripheral edge portion of the inner surface -1- of the inner injection-moulded part -1-. On the other hand, a plurality of inner welding gates -15- extends on the inner surface -1a- of the inner part -1-. Welding gate reinforcement-forming patterns -16- for forming welding gate reinforcements -17- on the inner surface -2a- of the outer part -2- are provided in each of the first equal ejection-side moulding cavities -13a-. The welding gate reinforcements -17- are positioned such that reinforcement ribs perpendicularly extending from the side walls -15b- of the welding gates -15- are formed when the outer part -2- is injected.

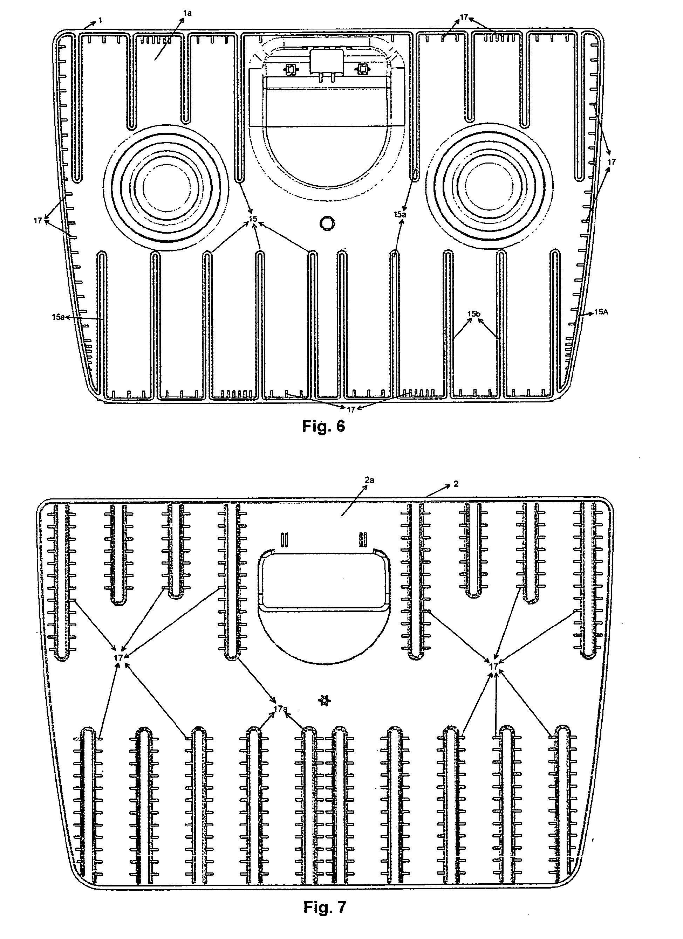

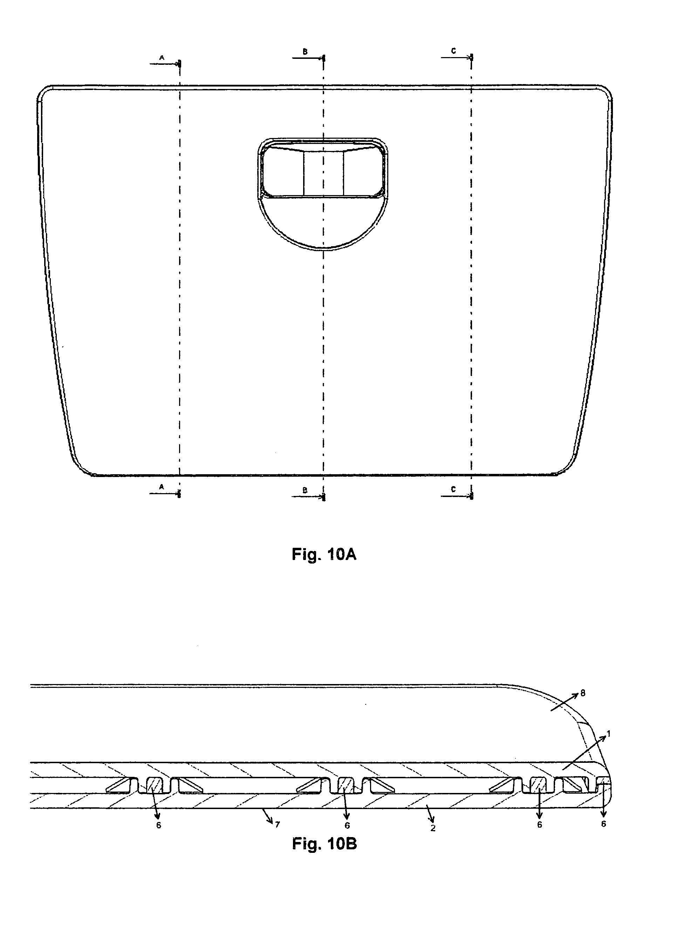

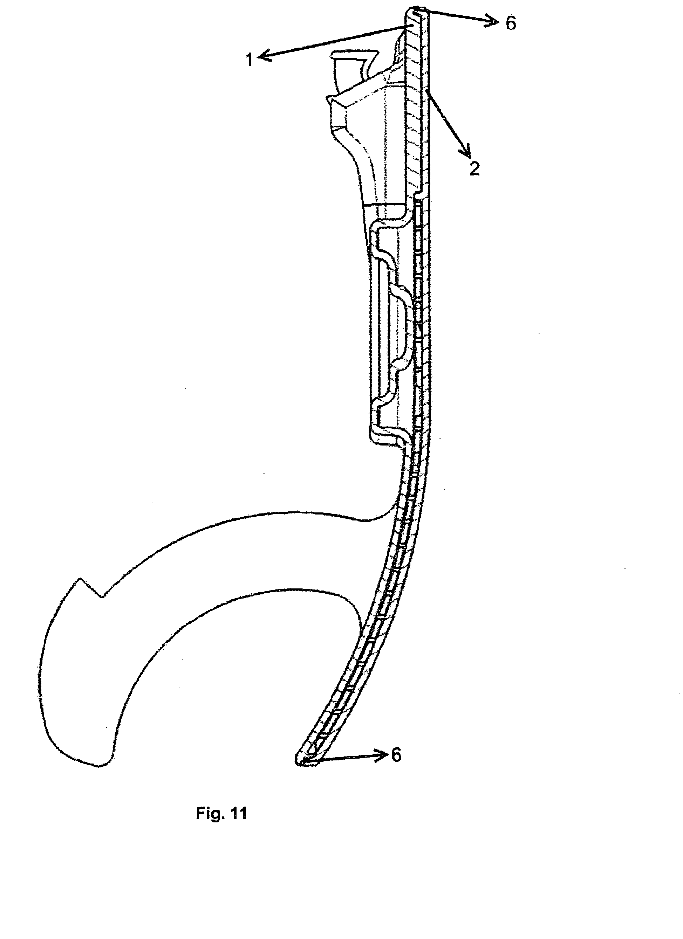

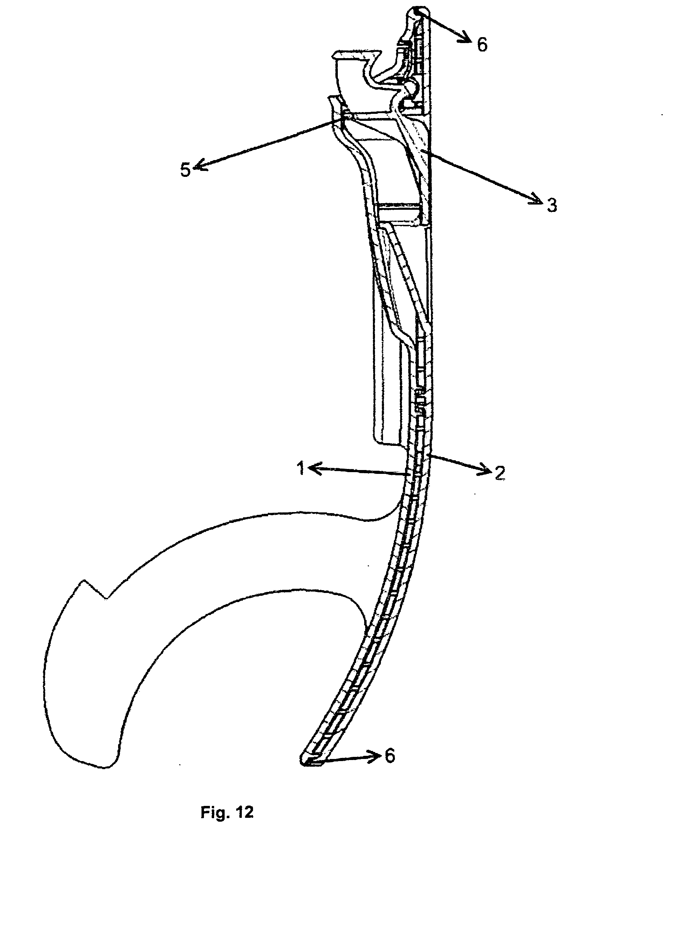

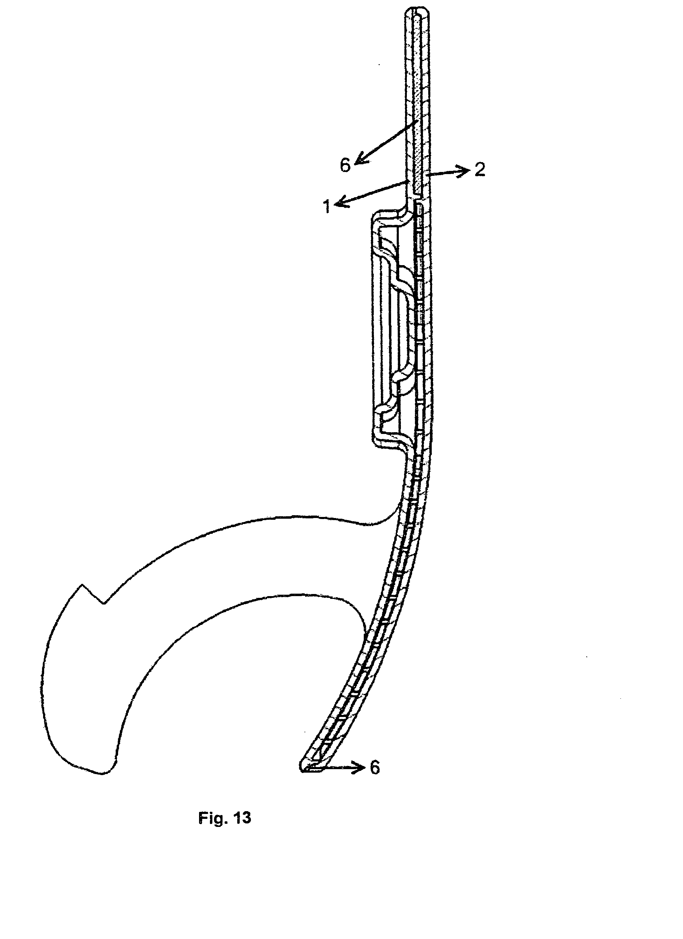

Figures 10A, 10B and 11-13 depict a finished glove box door comprising the inner and outer part -1- and -2- respectively, and the welding material -6- shown in figures 6 and 7.

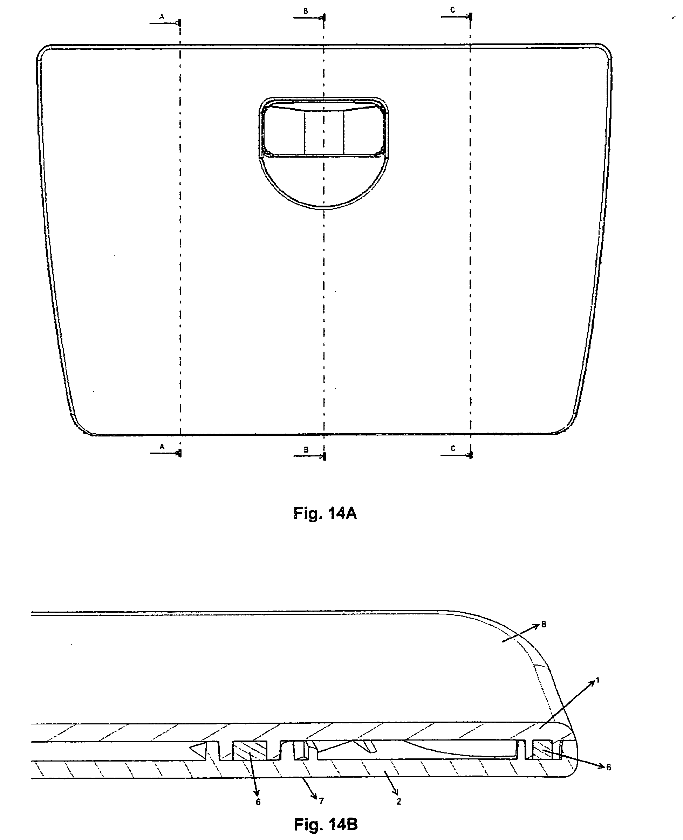

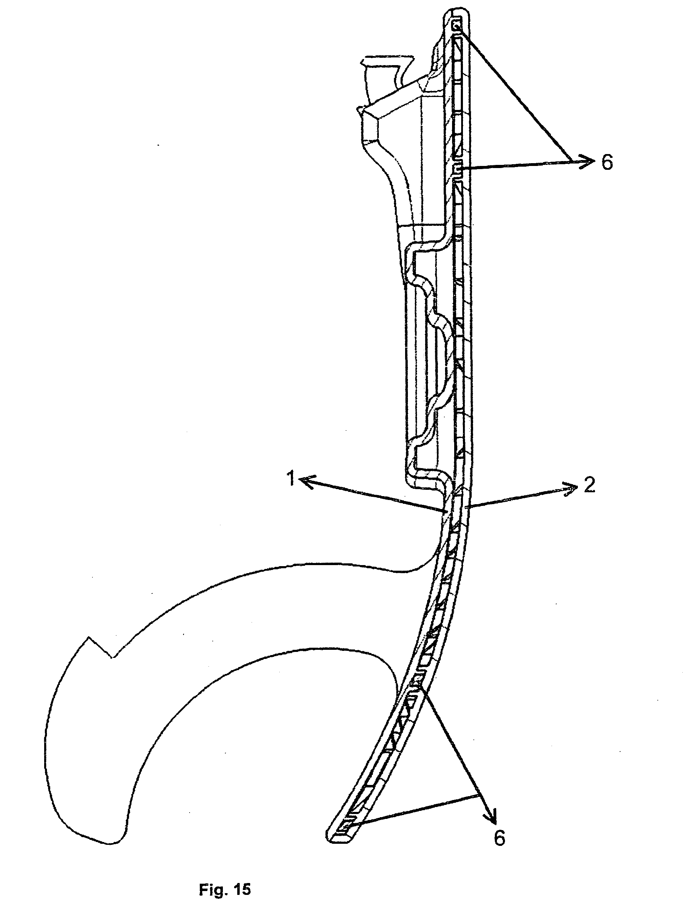

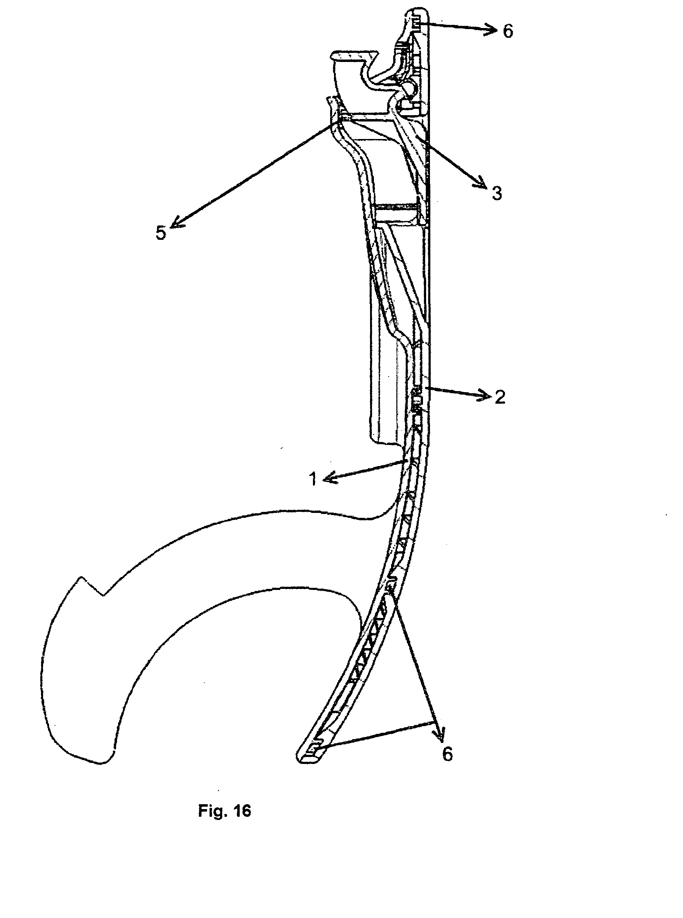

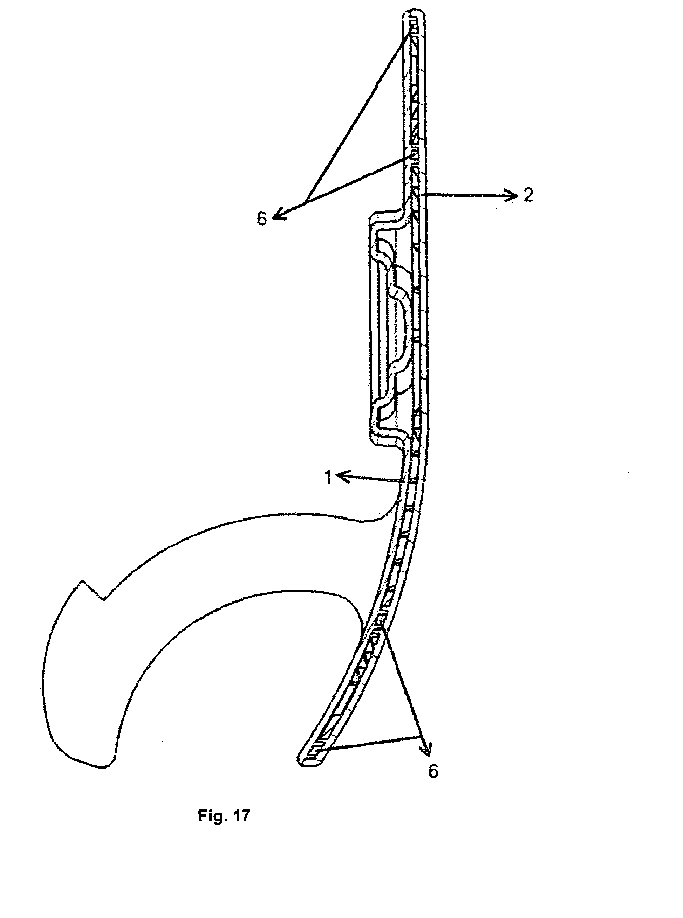

Figures 8 and 9 show alternative embodiments of, respectively, an injection-moulded inner part -1- and an injection-moulded outer part -2-. As apparent, the inner surface -1a- of the inner part -1- comprises a peripheral welding gate -15A-as well as a network of internal welding gates -15- that communicate with each other and with the peripheral welding gate -15A- such that the injection of welding material from various input points of the peripheral welding gate -15A- allows the welding material to flow into the internal welding gates -15-. On the other hand, the inner surface -2a- of the outer part -2- comprises welding gate reinforcements -17- in positions that are complementary to the positions of the welding gates -15- and -15A-on the inner surface -2a- of the outer part -2-. Figures 14-17 depict a finished glove box door comprising the inner and outer part -1- and -2- respectively, and the welding material -6- shown in figures 8 and 9.

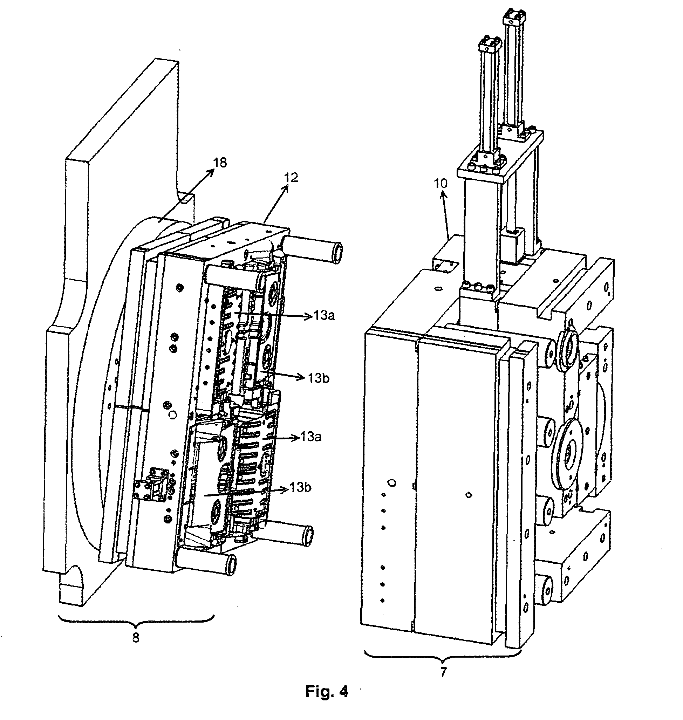

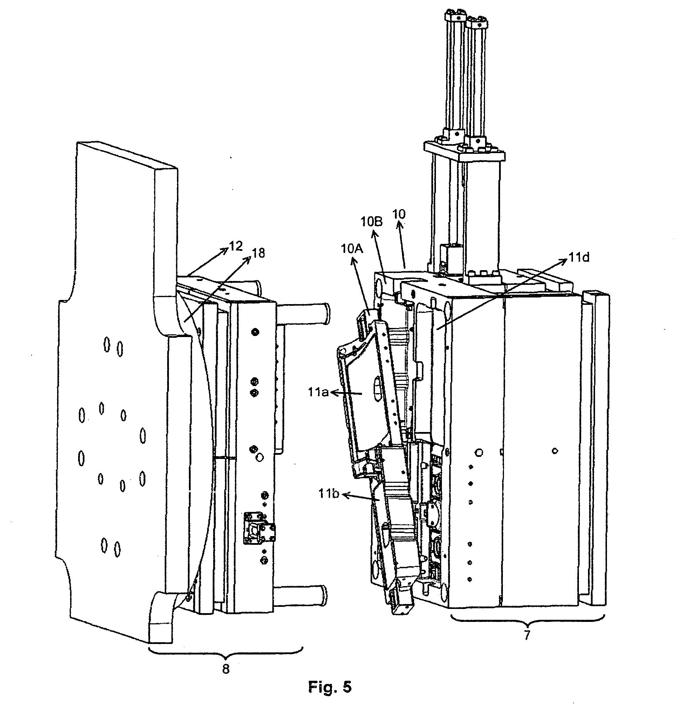

Figure 4 shows an embodiment in which, on the moulding device's ejection side -8- the ejection-side mould portion -12- is mounted on a rotary plate -18- such that the ejection-side mould portion -12- is rotary by 180º. Figure 5 shows an embodiment of the moulding device's injection side -7- where the first injection-side half -10A- of the injection-side mould portion -10- is rotary by 180º.

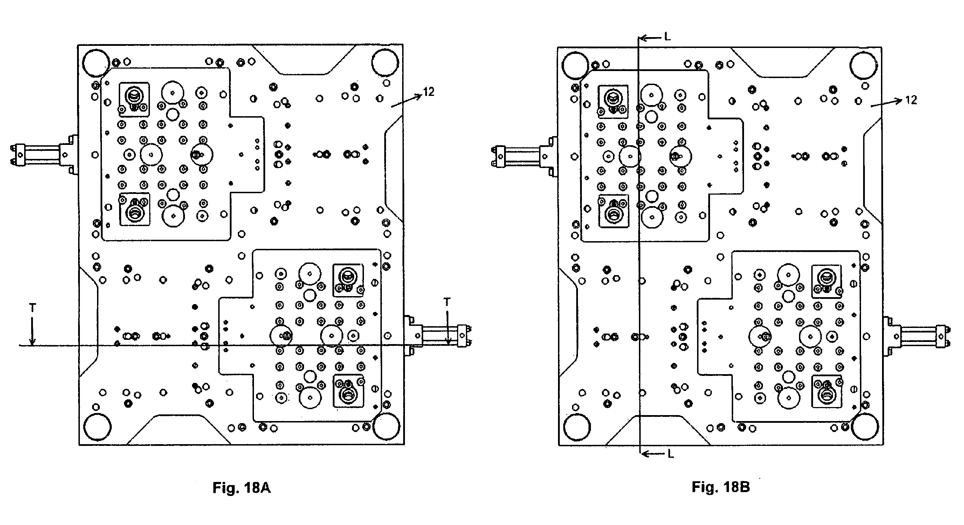

Figures 18-23 show the various stages of the moulding device shown in figures 2-5 is used to make a glove box door in accordance with an embodiment of the method of the present invention. Figure 18A is an elevation view of an embodiment of the rear portion of the ejection side of an embodiment of a moulding device according to the present invention showing a section line T-T referencing a transversal section, whilst figure 18B is an elevation view of an embodiment of the rear portion of the ejection side of the moulding device shown in figure 18A showing a section line L-L referencing a longitudinal section.

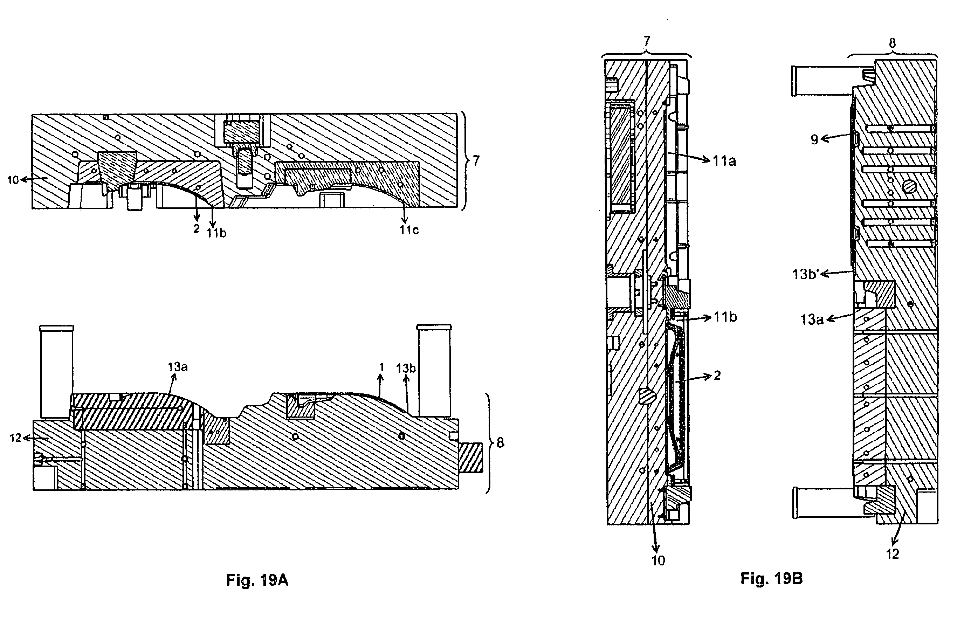

Figures 19A and 19B show the opened mould with a finished welded glove box door -9- in one -13b'- the of the second equal ejection-side moulding cavities -13b- on the ejection side -8- of the mould, when the finished welded glove box door -9- is about to be extracted. The two parts that are necessary to begin the next cycle are the inner part -1- of the glove box door in the other second equal ejection-side moulding cavity -13b- on the ejection side -8- of the mould and the outer part -2- of the glove box door in the first injection-side moulding cavity -11b- on the injection side -7- of the mould.

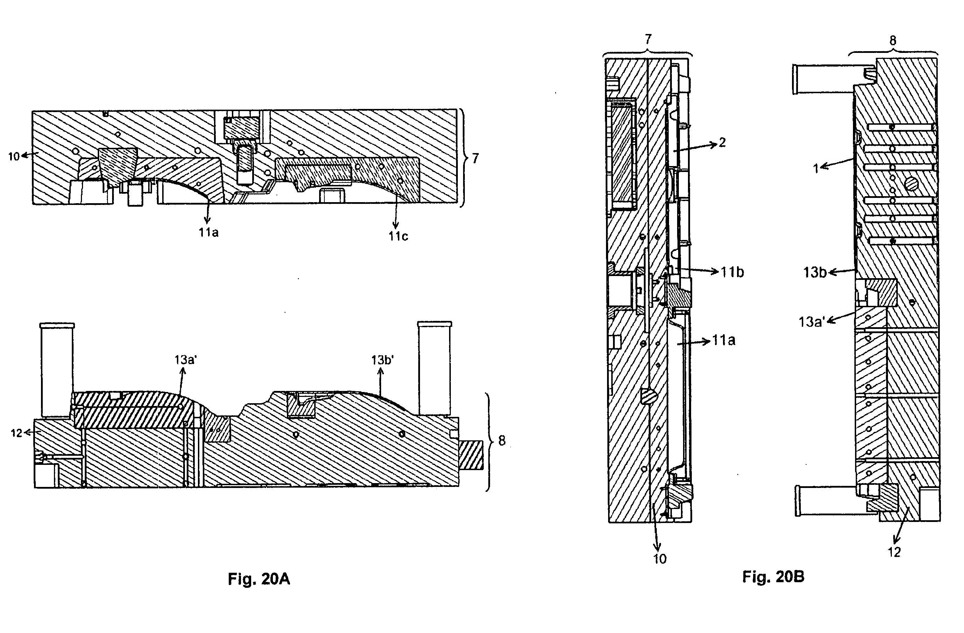

Figures 20A and 20B show the opened mould after the finished welded glove box door -9- has been extracted from cavity -13b'- and with both sides of the mould already rotated by 180º. The ejection side -8- of the mould has been rotated by means of a rotary plate -18- (cf. figures 4 and 5). Before, on the injection side -7-, the first injection-side half -10A- that has moved forward, rotated 180 degrees and moved back inside the second injection side half -10B-. These two movements have put the inner part -1- in the second ejection-side moulding cavity -13b- and the outer part -2- in the first equal injection-side moulding cavity -11b-, from which the next welded glove box door will be formed, in front of each other.

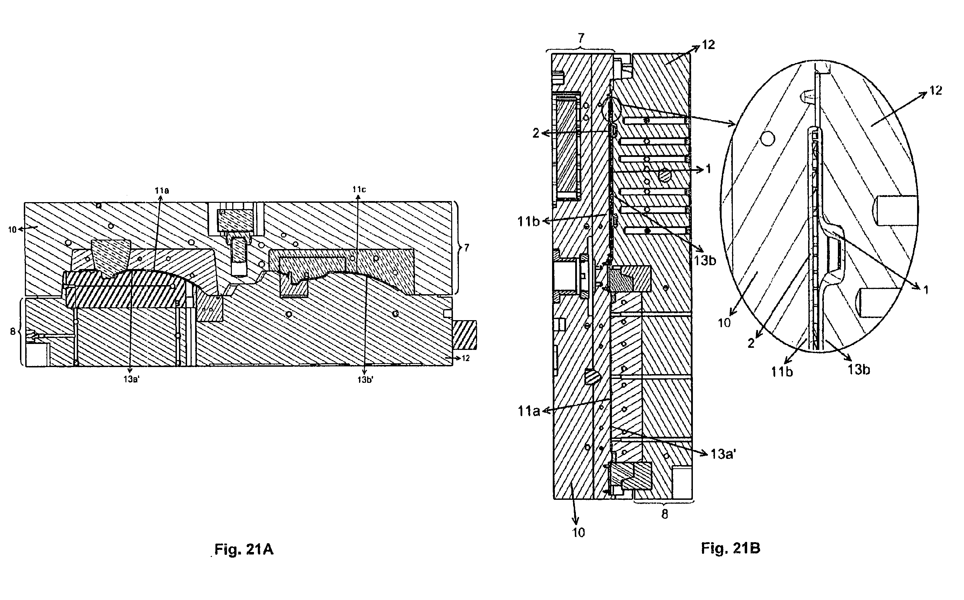

Figures 21A and 21B show the closed mould with the inner part -1- and the outer part -2- assembled together inside the mould before resin injection. The space between the first injection-side moulding cavity -11a- (in the next cycle after a 180º rotation of the first injection-side half -1 0A-, it will be the injection-side moulding cavity -11a-, in the subsequent cycle, after a further 180º rotation, it will be again injection-side moulding cavity -11b-, etc.) of the injection-side mould portion -10- and one -13a'- of the first equal ejection-side moulding cavities -13a- will mould the outer part -2-, and the space between the second injection-side moulding cavity -11c- of the injection side -7- of the mould and the cavity mould -13b'- of the ejection side of the mould will mould the inner part -1-.

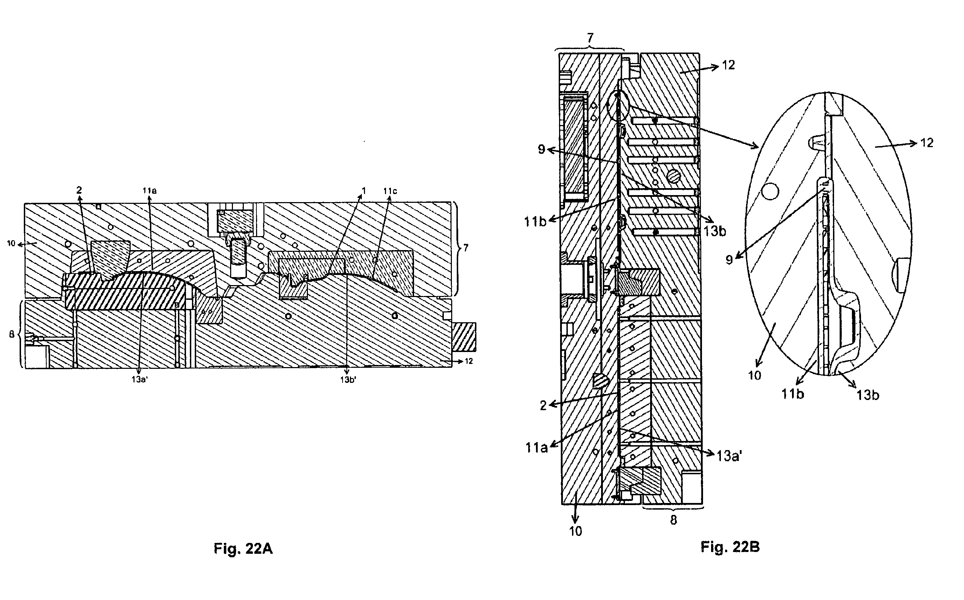

Figures 22A and 22B show the closed mould with the injected inner part -1- between the cavities -11c- and -13b'- as well as the outer part -2- between cavities -11a- and -13a'-. The welding material has been injected between the cavities -11band -13b- such that the inner part -1- has been welded to the outer part -2- and "transformed" these parts into the finished glove box door -9-.

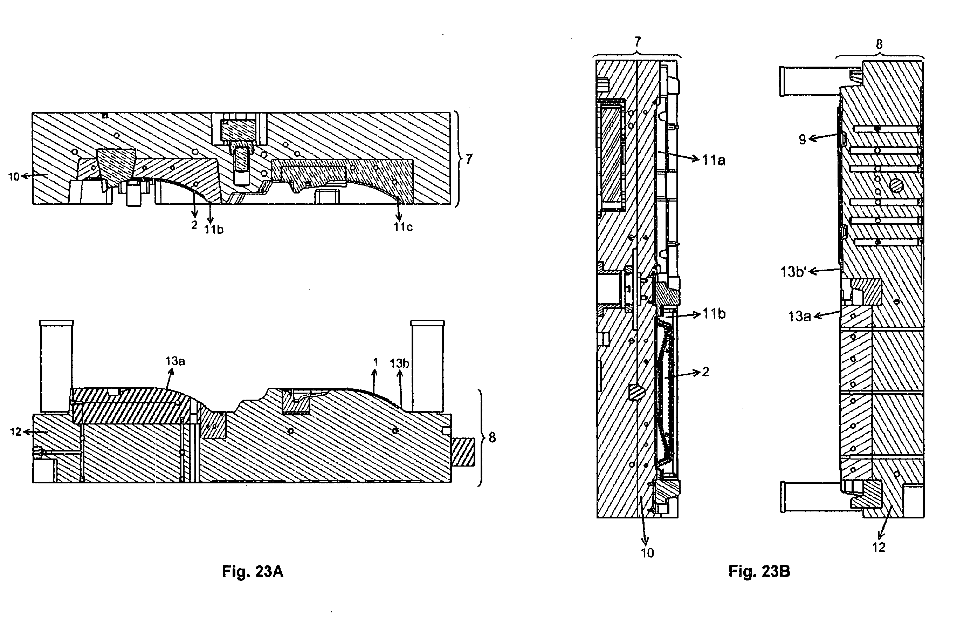

Figures 23A and 23B show the opened mould ready for the extraction of the welded finished glove box door -9- from the second equal ejection-side moulding cavity -13b'-, and also ready for the rotation of the injection side -7- and the ejection side -8- of the mould by which the next inner part -1- in the second equal ejection-side moulding cavity -13b- and the outer part -2- in the first injection-side moulding cavity -11b- will be brought in front of each other, to begin another cycle.

Whilst the embodiments of the invention have been described herein above with regard to manufacturing a glove box door, this invention can also be applied to any assemblies made of two parts need to be welded together not only around their exterior perimeters but also by their respective inner surfaces that face each other.

## Claims

1. An injection moulding device for making articles from at least two injection-moulded parts, comprising an injection side (7) with an injection-side mould portion (10) comprising injection-side moulding cavities (11), and an ejection side (8) with an ejection-side mould portion (12) comprising ejection-side moulding cavities (13), the moulding device **characterized in that**
the injection-side mould portion (10) comprises a first injection-side half (10A) with two equal first injection-side moulding cavities (11a, 11b) for moulding an outer surface (2b) of a first part (2) to be formed by injection moulding, the two equal first injection-side moulding cavities (11 a, 11 b) being mirror-images of each other, and a second injection-side half (10B) with a second injection-side moulding cavity (11c) for moulding an inner surface (1 a) of a second part (1) to be formed by injection moulding, and a void cavity (11d);
the ejection-side mould portion (12) comprises two first equal ejection-side moulding cavities (13a) for moulding an inner surface (2a) of said first part (2), and two second equal ejection-side cavities (13b) for moulding an outer surface of said second part (1), the two first equal ejection-side moulding cavities (13a) and the two second equal ejection-side moulding cavities (13b) respectively mirroring each other, and being positioned such that one of the first equal ejection-side moulding cavities (13a) and one of the second equal ejection-side moulding cavities (13b) is located on each half of the ejection-side mould portion (12);
the first injection-side half (10A) of the injection-side mould portion (10) is rotary by 180°;
the ejection-side mould portion (12) is rotary by 180°;
welding-gate-forming patterns (14, 14A) are provided in the second injection-side moulding cavity (11c), in each of the second equal ejection-side moulding cavities (13b, 13b') or in both said second injection-side moulding cavity (11c) and each of the second equal ejection-side moulding cavities (13b, 13b'), the welding-gate-forming patterns (14) being designed to form injection-moulded welding gates (15, 15A) each comprised of a channel (15a) located between protruding side walls (15b);
the welding-gate-forming patterns (14) being dimensioned such that the side walls (15b) of the welding gates (15, 15A) formed on the inner surface (1a, 2a) of one injection-moulded part (1, 2) may contact the inner surface (2a, 1a) of the other injection-moulded part (1, 2) so that, when a welding material (6) has been injected into the channels (15a) of the welding gates (15), the welding gates on the inner surface (1a, 2a) of one injection-moulded part (1,2) become welded to the inner surface (2a, 1 a) of the other injection-moulded part (2, 1).

2. An injection moulding device according to claim 1, **characterized in that** the welding-gate-forming patterns (14) are provided in the second injection-side moulding cavity (11c), whilst welding gate reinforcement-forming patterns (16) being shaped to form welding gate reinforcing channels (17a) surrounding the side walls (15b) of the welding gates (15), are provided in each of the first equal ejection-side moulding cavities (13a).

3. An injection moulding device according to claim 2, **characterized in that** the reinforcement-forming patterns (16) further comprise lateral extensions being positioned such that reinforcement ribs (17) extending laterally from outer side walls of the welding gate reinforcements (17a) are formed along with the inner part (1) at the time of the injection.

4. An injection moulding device according to claim 1, **characterized in that**
a first plurality of welding-gate-forming patterns (14) is provided in each of the first equal ejection-side moulding cavities (13a), whilst a first plurality of welding gate reinforcement-forming patterns (16) is provided in the second injection-moulding cavity (11c) for forming first welding gate reinforcements (17, 17a), the reinforcement-forming patterns (16) of the first plurality of reinforcement-forming patterns being positioned such that they form first welding gate reinforcements (17, 17a) surrounding the side walls (15b) of the welding gates (15) formed by said first plurality of welding-gate-forming patterns (14) ; and **in that**
a second plurality of welding-gate-forming patterns (14) is provided in the second injection-moulding cavity (11c) for forming second welding gates (15) and a second plurality of reinforcement-forming patterns (16) is provided in each of the first equal ejection-side moulding cavities (13a) for forming second welding gate reinforcements (17, 17a), the reinforcement-forming patterns (16) of the second plurality of reinforcement-forming patterns (16) being positioned such that they form second welding gate reinforcements (17, 17a) surrounding the side walls (15b) of the second welding gates (15) formed by the second plurality of welding gate patterns (14).

5. A method for making articles from two injection moulded parts (1, 2) using a device as defined in any of the preceding claims comprising injection-moulding a first part (2) and injection-moulding a second part (1) and welding the parts (1, 2) together to form a finished article (9), **characterized in that** the method is carried out in a moulding device as defined in claim 1, and **in that** it comprises
forming welding gates (15) on at least one of the inner surfaces (1a, 2a) of the two injection-moulded parts (1, 2) that are to be welded together, the welding gates (15) being comprised of channels (15a) located between protruding side walls (15b);
positioning the first part (2) on the injection-side mould portion (10) and the second part (1) on the ejection-side mould portion (12) by rotating a first half (10A) of the injection-side mould portion (10) and the ejection-side mould portion (12) each by 180°, thereby positioning the two parts (1, 2) such that their inner surfaces (1a, 2a) face each other and the protruding side walls (15b) of the welding gates (15) of one of the parts contact the inner surface (1a, 2a) of the other parts (1, 2);
closing the moulding device and injecting a welding material (6) through the channels (15a) of the welding gates (15) such that the welding gates (15) on the inner surface (1a, 2a) of one injection-moulded part (1, 2) become welded to the inner surface (2a, 1 a) of the other injection-moulded part (2, 1);
opening the moulding device and extracting the finished articles (9).

6. A method according to claim 5, **characterized in that** the welding gates (15) are formed on the inner surface (1 a) of one of the parts (1) and welding gate reinforcing channels (17A) surrounding the welding gates (15) are formed on the inner surface (2a) of the other part (2).

7. A method according to claim 6, **characterized in that**, that welding gate reinforcing ribs (17) extending laterally from outer side walls of the welding gate reinforcing channels (17A) are formed.

## Patentansprüche

1. Spritzgussvorrichtung zur Herstellung von Artikeln aus zumindest zwei spritzgegossenen Teilen mit einer Angussseite (7), die einen angussseitigen Formbereich (10) mit angussseitigen Gießkavitäten (11) aufweist, und mit einer Auswerferseite (8), die einen auswerferseitigen Formbereich (12) mit auswerferseitigen Gießkavitäten (13) aufweist, dabei ist die Gussvorrichtung **dadurch gekennzeichnet, dass**
- der angussseitige Formbereich (10) eine erste angussseitige Hälfte (10A) mit zwei gleichen ersten angussseitigen Gießkavitäten (11 a, 11 b) zum Formen einer äußeren Oberfläche (2b) eines ersten Teils (2) durch Spritzgießen aufweist, wobei die zwei gleichen ersten angussseitigen Gießkavitäten (11 a, 11 b) zueinander spiegelbildlich sind, und eine zweite angussseitige Hälfte (10B) aufweist, mit einer zweiten angussseitigen Gießkavität (11c) zum Formen einer inneren Oberfläche (1a) eines zweiten Teiles (1) durch Spritzgießen, sowie eine Leerkavität (11 d) aufweist,
- der auswerferseitige Formbereich (12) zwei erste gleiche auswerferseitige Gießkavitäten (13a) zum Formen einer inneren Oberfläche (2a) des ersten Teils (2) und zwei zweite gleiche auswerferseitige Kavitäten (13b) zum Formen einer äußeren Oberfläche des zweiten Teiles (1) aufweist, wobei die zwei ersten gleichen auswerferseitigen Gießkavitäten (13a) und die zwei zweiten gleichen auswerferseitigen Gießkavitäten (13b) spiegelbildlich und derart angeordnet sind, dass eine der ersten gleichen auswerferseitigen Gießkavitäten (13a) und eine der beiden zweiten gleichen auswerferseitigen Gießkavitäten (13b) auf jeweils einer Hälfte des auswerferseitigen Formbereiches (12) angeordnet sind,
- die erste angussseitige Hälfte (10A) des angussseitigen Formbereiches (10) um 180° drehbar ist,
- der auswerferseitige Formbereich (12) um 180°drehbar ist,
- Schweißöffnung-bildende Profile (14, 14a) in der zweiten angussseitigen Gießkavität (11c), in jeder der zweiten gleichen auswerferseitigen Gießkavitäten (13b, 13b') oder in beiden der zweiten angussseitigen Gießkavitäten (11c) und in jeder der zweiten gleichen auswerferseitigen Gießkavitäten (13b, 13b') vorgesehen sind, wobei die Schweißöffnung-bildenden Profile (14) derart ausgebildet sind, dass sie spritzgegossene Schweißöffnungen (15, 15A) ausbilden, welche jeweils von einem Kanal (15a) zwischen zwei vorspringenden Seitenwänden (15b) gebildet werden,
- die Schweißöffnung-bildenden Profile (14) sind so dimensioniert, dass die Seitenwände (15b) der Schweißöffnungen (15, 15A) auf der Innenseite (1a, 2a) eines spritzgegossenen Teiles (1, 2) die Innenseite (2a, 1a) des anderen spritzgegossenen Teils (1, 2) berühren, sodass, wenn Schweißmaterial (6) in die Kanäle (15a) der Schweißöffnungen (15) injiziert wurde, die Schweißöffnungen auf der Innenseite (1 a, 2a) eines spritzgegossenen Teiles (1, 2) mit der Innenseite (2a, 1 a) des anderen spritzgegossenen Teils (2, 1) verschweißt werden.

2. Spritzgussvorrichtung nach Anspruch 1, **dadurch gekennzeichnet, dass** die Schweißöffnung-bildenden Profile (14) in der zweiten angussseitigen Gießkavität (11c) vorgesehen sind, und verstärkungsbildende Profile (16) für die Schweißöffnungen in jeder der ersten gleichen auswerferseitigen Gießkavitäten (13a) vorgesehen und derart ausgebildet sind, dass sie Verstärkungskanäle (17a) für die Schweißöffnungen bilden und die Seitenwände (15b) der Schweißöffnungen (15) umgeben.

3. Spritzgussvorrichtung nach Anspruch 2, **dadurch gekennzeichnet, dass** die verstärkungsbildenden Profile (16) weiter seitliche Fortsätze aufweisen, die so angeordnet sind, dass die Verstärkungsrippen (17) seitlich an den äußeren Seitenwänden der Verstärkungen (17a) der Schweißöffnungen vorstehen und mit dem inneren Teil (1) während des Spritzgießen ausgebildet werden.

4. Spritzgussvorrichtung nach Anspruch 1, **dadurch gekennzeichnet, dass** eine erste Vielzahl von Schweißöffnung-bildende Profile (14) in jeder ersten gleichen auswerferseitigen Gießkavität (13a) vorgesehen ist, während eine erste Vielzahl von verstärkungsbildenden Profile (16) für die Schweißöffnungen in der zweiten angussseitigen Gießkavität (11c) vorgesehen ist, um die ersten Verstärkungen (17, 17a) zu bilden, wobei die verstärkungsbildenden Profile (16) der ersten Vielzahl der verstärkungsbildenden Profile so angeordnet ist, dass sie erste Verstärkungen (17, 17a) für Schweißöffnungen bilden, welche die Seitenwände (15b) der Schweißöffnungen (15) umgeben, die von der ersten Vielzahl der Schweißöffnung-bildenden Profile (14) gebildet werden, umgeben, sodass eine zweite Vielzahl von Schweißöffnung-bildenden Profile (14) in der zweiten angussseitigen Gießkavität (11 c) zum Ausbilden zweiter Schweißöffnungen (15) und eine zweite Vielzahl von verstärkungsbildenden Profilen (16) in jeder der ersten auswerferseitigen Gießkavität (13a) vorgesehen ist, um zweite Verstärkungen (17, 17a) für Schweißöffnungen zu bilden, wobei die verstärkungsbildenden Profile (16) der zweiten Vielzahl der verstärkungsbildenden Profile (16) so angeordnet sind, dass sie zweite Verstärkungen (17, 17a) der Schweißöffnungen bilden, die die Seitenwände (15b) der zweiten Schweißöffnungen (15) bilden, welche von der zweiten Vielzahl der Schweißöffnungsprofile (14) gebildet werden.

5. Verfahren zur Herstellung von Artikeln aus zwei spritzgegossenen Teilen (1, 2) unter Verwendung einer Vorrichtung gemäß einem der vorgenannten Ansprüche, aufweisend:
- Spritzgießen eines ersten Teils (2) und Spritzgießen eines zweiten Teils (1) sowie Verschweißen der Teile (1, 2), um einen fertigen Artikel (9) zu bilden, **dadurch gekennzeichnet, dass** das Verfahren in einer Gussvorrichtung gemäß Anspruch 1 ausgeführt wird und dass es weiter aufweist:
- Ausbilden von Schweißöffnungen (15) zumindest auf einer Innenfläche (1a, 2a) der beiden spritzgegossenen Teile (1, 2), welche verschweißt werden sollen, wobei die Schweißöffnungen (15) aus Kanälen (15a) bestehen, die zwischen vorspringenden Seitenwänden (15b) angeordnet sind,
- Anordnen des ersten Teils (2) im angussseitigen Formbereich (10) und des zweiten Teils (1) im auswerferseitigen Formbereich (12) durch Drehen einer ersten Hälfte (10A) des angussseitigen Formbereiches (10) und des auswerferseitigen Formbereiches (12) jeweils um 180°, wodurch die beiden Teile (1, 2) derart angeordnet werden, dass ihre Innenflächen (1 a, 2a) einander gegenüberliegen und die vorspringenden Seitenwände (15b) der Schweißöffnungen (15) eines der beiden Teile die Innenfläche (1 a, 2a) des anderen Teils (1, 2) berührt,
- Schließen der Gussvorrichtung und Injizierens eines Schweißmateriales (6) durch die Kanäle (15a) der Schweißöffnungen (15) derart, dass die Schweißöffnungen (15) auf der Innenfläche (1a, 2a) eines spritzgegossenen Teiles (1, 2) mit der Innenfläche (2a, 1 a) des anderen spritzgegossenen Teils (2, 1) verschweißt werden,
- Öffnen der Gussvorrichtung und Herausnehmen des fertigen Artikels (9).

6. Verfahren nach Anspruch 5, **dadurch gekennzeichnet, dass** die Schweißöffnungen (15) auf der Innenfläche (1 a) eines der Teile (1) ausgebildet sind und Verstärkungskanäle (17a) der Schweißöffnungen, die die Schweißöffnungen (15) umgeben, auf der Innenfläche (2a) des anderen Teils (2) ausgebildet sind.

7. Verfahren nach Anspruch 6, **dadurch gekennzeichnet, dass** Verstärkungsrippen (17) der Schweißöffnungen ausgebildet werden, die sich seitlich über die äußeren Seitenwände der Verstärkungskanäle (17a) der Schweißöffnungen erstrecken.

## Revendications

1. Dispositif de moulage par injection pour fabriquer des articles à partir d'au moins deux parties moulées par injection, comprenant un côté injection (7) avec une partie moule côté injection (10) comprenant des cavités de moulage côté injection (11), et un côté éjection (8) avec une partie moule côté éjection (12) comprenant des cavités de moulage côté éjection (13), le dispositif de moulage étant **caractérisé en ce que**
la partie moule côté injection (10) comprend une première moitié côté injection (10A) avec deux premières cavités égales de moulage côté injection (11a, 11b) pour mouler une surface extérieure (2b) d'une première partie (2) destinée à être formée par moulage par injection, les deux premières cavités égales de moulage côté injection (11a, 11b) étant des images inversées l'une de l'autre, et un seconde moitié côté injection (10B) avec une seconde cavité de moulage côté injection (11c) pour mouler une surface intérieure (1a) d'une seconde partie (1) destinée à être formée par moulage par injection, et une cavité vide (11d) ;
la partie moule côté éjection (12) comprend deux premières cavités égales de moulage côté éjection (13a) pour mouler une surface intérieure (2a) de ladite première partie (2), et deux secondes cavités égales côté éjection (13b) pour mouler une surface extérieure de ladite seconde partie (1), les deux premières cavités égales de moulage côté éjection (13a) et les deux secondes cavités égales de moulage côté éjection (13b) étant respectivement des images inversées les unes des autres, et étant positionnées de sorte qu'une des premières cavités égales de moulage côté éjection (13a) et une des secondes cavités égales de moulage côté éjection (13b) soit positionnée sur chaque moitié de la partie moule côté éjection (12) ;
la première moitié côté injection (10A) de la partie moule côté injection (10) est rotative de 180° ;
la partie moule côté éjection (12) est rotative de 180° ;
des motifs de formage d'entrée de soudure (14, 14A) sont prévus dans la seconde cavité de moulage côté injection (11c), dans chacune des secondes cavités égales de moulage côté éjection (13b, 13b') ou dans ladite seconde cavité de moulage côté injection (11c) ainsi que dans chacune des secondes cavités égales de moulage côté éjection (13b, 13b'), les motifs de formage d'entrée de soudure (14) étant conçus pour former des entrées de soudage moulées par injection (15, 15A) chacune composée d'un canal (15a) positionné entre des parois latérales saillantes (15b) ;
les motifs de formage d'entrée de soudure (14) étant dimensionnés de sorte que les parois latérales (15b) des entrées de soudage (15, 15A) formées sur la surface intérieure (1a, 2a) d'une partie moulée par injection (1, 2) puissent entrer en contact avec la surface intérieure (2a, 1a) de l'autre partie moulée par injection (1, 2) pour que, lorsqu'un matériau de soudage (6) a été injecté dans les canaux (15a) des entrées de soudage (15), les entrées de soudage sur la surface intérieure (1a, 2a) d'une partie moulée par injection (1, 2) soient soudées à la surface intérieure (2a, 1a) de l'autre partie moulée par injection (2, 1).

2. Dispositif de moulage par injection selon la revendication 1, **caractérisé en ce que** les motifs de formage d'entrée de soudure (14) sont prévus dans la seconde cavité de moulage côté injection (11c), alors que des motifs de formage de renfort d'entrée de soudage (16) façonnés pour former des canaux de renforcement d'entrée de soudage (17a) entourant les parois latérales (15b) des entrées de soudage (15) sont prévus dans chacune des premières cavités égales de moulage côté éjection (13a).

3. Dispositif de moulage par injection selon la revendication 2, **caractérisé en ce que** les motifs de formage de renfort (16) comprennent en outre des prolongements latéraux positionnés de sorte que des nervures de renfort (17) s'étendant latéralement à partir de parois latérales extérieures des renforts d'entrée de soudure (17a) soient formées conjointement avec la partie intérieure (1) au moment de l'injection.

4. Dispositif de moulage par injection selon la revendication 1, **caractérisé en ce que**
une première pluralité de motifs de formage d'entrée de soudure (14) est prévue dans chacune des premières cavités égales de moulage côté éjection (13a), alors qu'une première pluralité de motifs de formage de renfort d'entrée de soudage (16) est prévue dans la seconde cavité de moulage par injection (11c) pour former des premiers renforts d'entrée de soudure (17, 17a), les motifs de formage de renfort (16) de la première pluralité de motifs de formage de renfort étant positionnés de sorte qu'ils forment des premiers renforts d'entrée de soudure (17, 17a) entourant les parois latérales (15b) des entrées de soudage (15) formées par ladite première pluralité de motifs de formage d'entrée de soudure (14) ; et **en ce que**
une seconde pluralité de motifs de formage d'entrée de soudure (14) est prévue dans la seconde cavité de moulage par injection (11c) pour former des secondes entrées de soudage (15) et une seconde pluralité de motifs de formage de renfort (16) est prévue dans chacune des premières cavités égales de moulage côté éjection (13a) pour former des seconds renforts d'entrée de soudage (17, 17a), les motifs de formage de renfort (16) de la seconde pluralité de motifs de formage de renfort (16) étant positionnés de sorte qu'ils forment des seconds renforts d'entrée de soudage (17, 17a) entourant les parois latérales (15b) des secondes entrées de soudage (15) formées par la seconde pluralité de motifs d'entrée de soudage (14).

5. Procédé pour fabriquer des articles à partir de deux parties moulées par injection (1, 2) en utilisant un dispositif selon une quelconque des revendications précédentes, comprenant le moulage par injection d'une première partie (2) et le moulage par injection d'une seconde partie (1) et le soudage des parties (1, 2) ensemble pour former un article fini (9), **caractérisé en ce que** le procédé est réalisé dans un dispositif de moulage selon la revendication 1, et **en ce qu'**il comprend :
le formage des entrées de soudage (15) sur au moins une parmi les surfaces intérieures (1a, 2a) des deux parties moulées par injection (1, 2) qui sont destinées à être soudées ensemble, les entrées de soudage (15) étant composées de canaux (15a) positionnés entre des parois latérales saillantes (15b) ;
le positionnement de la première partie (2) sur la partie moule côté injection (10) et de la seconde partie (1) sur la partie moule côté éjection (12) en faisant tourner une première moitié (10A) de la partie moule côté injection (10) et la partie moule côté éjection (12) chacune de 180°, positionnant ainsi les deux parties (1, 2) de sorte que leurs surfaces intérieures (1a, 2a) se fassent face et les parois latérales saillantes (15b) des entrées de soudage (15) d'une des parties entrent en contact avec la surface intérieure (1a, 2a) de l'autre des parties (1, 2) ;
la fermeture du dispositif de moulage et l'injection d'un matériau de soudage (6) à travers les canaux (15a) des entrées de soudage (15) de sorte que les entrées de soudage (15) sur la surface intérieure (1a, 2a) d'une partie moulée par injection (1, 2) soient soudées à la surface intérieure (2a, 1a) de l'autre partie moulée par injection (2, 1) ;
l'ouverture du dispositif de moulage et l'extraction des articles finis (9).

6. Procédé selon la revendication 5, **caractérisé en ce que** les entrées de soudage (15) sont formées sur la surface intérieure (1a) d'une des parties (1) et les canaux de renforcement d'entrée de soudage (17A) entourant les entrées de soudage (15) sont formés sur la surface intérieure (2a) de l'autre partie (2).

7. Procédé selon la revendication 6, **caractérisé en ce que** les nervures de renforcement d'entrées de soudage (17) s'étendant latéralement à partir de parois latérales extérieures des canaux de renforcement d'entrée de soudage (17A) sont formées.
